Europäisches Patentamt

European Patent Office

Office européen des brevets

(11) Veröffentlichungsnummer: **0 386 528**
**A1**

## (12) EUROPÄISCHE PATENTANMELDUNG

(21) Anmeldenummer: **90103356.3**

(22) Anmeldetag: **21.02.90**

(51) Int. Cl.⁵: **B65G 27/02, B65G 49/02, C25D 17/28**

(30) Priorität: **06.03.89 DE 3907185**

(43) Veröffentlichungstag der Anmeldung:
**12.09.90 Patentblatt 90/37**

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Birkle, Siegfried, Dr.**
**Veit-Stoss-Strasse 46**
**D-8552 Höchstadt/Aisch(DE)**
Erfinder: **Gehring, Johann**
**Hohe Warte 2**
**D-8521 Spardorf(DE)**

(54) **Einrichtung zum Transport von schüttfähigem Gut mit einem Schwingförderer, der in eine Flüssigkeit eintaucht.**

(57) Die Förderrinne (20) des Schwingförderers ist wendelförmig um ein Zentralrohr (2) angeordnet und von einem gasdichten Behälter (6) umgeben, der eine Flüssigkeit (12) enthält, in die der Schwingförderer mit dem Zentralrohr (2) teilweise eintaucht. Gemäß der Erfindung ist die Förderrinne (20) mit wenigstens einem Produktmischer (100) versehen, der radial unterhalb der Förderrinne (20) angeordnet ist und mit Düsenbohrungen (104) versehen ist, die zur Strömungsführung der Flüssigkeit (12) dienen. In dieser Ausführungsform erhält man eine gute Durchmischung des Schüttgutes (40) und damit eine gleichmäßige Beschichtung.

FIG 2

EP 0 386 528 A1

## Einrichtung zum Transport von schüttfähigem Gut mit einem Schwingförderer, der in eine Flüssigkeit eintaucht

Die Erfindung bezieht sich auf eine Einrichtung zum Transport von schüttfähigem Gut, insbesondere zum galvanischen Abscheiden von Aluminium aus aprotischen, sauerstoff- und wasserfreien aluminiumorganischen Elektrolyten mit einem Schwingförderer. Die Förderrinne des Schwingförderers ist wendelförmig um ein Zentralrohr angeordnet und von einem Behälter umgeben. Dieser Behälter enthält eine Flüssigkeit, in die der Schwingförderer mit dem Zentralrohr teilweise eintaucht.

Es ist bekannt, daß durch Oberflächenveredlung von metallischen Bauteilen, deren Lebensdauer verlängert werden kann und neue Anwendungsgebiete erschlossen werden können. Beispielsweise kann eine Beschichtung von Leichtmetall und Eisenwerkstoffen zweckmäßig sein, da es sich bei ihnen im allgemeinen um verhältnismäßig unedle Metalle handelt, deren Oberflächen unter der Einwirkung der Atmosphäre korrodieren können. Durch entsprechende Vorbehandlung erhalten die Bauteile eine blanke deckschichtfreie Oberfläche. Die metallische Beschichtung kann durch eine Nachbehandlung ergänzt werden.

Während der galvanischen Bearbeitung müssen die schüttfähigen Kleinteile so zusammengehalten werden, daß jedes Einzelteil elektrischen Kontakt hat. Andererseits soll das zu behandelnde Schüttgut soweit ausgebreitet werden, daß die Metallabscheidung auf einer möglichst großen Warenoberfläche erfolgen kann und eine möglichst gleichmäßige Stromdichte auf allen Teilen gewährleistet ist. Eine weitere wesentliche Voraussetzung für die Erzielung einwandfreier Metallüberzüge mit einer gleichmäßigen Schichtdicke ist eine ausreichende Durchmischung des Gutes wäh rend der galvanischen Bearbeitung. Die Einrichtungen zur elektrolytischen Oberflächenbeschichtung sind mit Fördermitteln für den Transport des Schüttgutes durch den Elektrolyten ausgerüstet, durch die in Verbindung mit entsprechenden Ein- und Ausgangsschleusen eine kontinierliche oder auch intervallmäßige Eindosierung und Entnahme des Gutes ermöglicht wird. Außerdem muß sowohl die Bewegung durch den Elektrolyten sowie die Durchmischung des Gutes als auch der Transport durch den Elektrolyten so vorgenommen werden, daß eine schonende Behandlung des Gutes gewährleistet ist und auch empfindliche Bauteile während der galvanischen Behandlung nicht mechanisch beschädigt werden.

Diese Anforderungen sind aber nicht nur bei der elektrolytischen Oberflächenbeschichtung, insbesondere dem Massengalvanisieren, gegeben, sondern können beispielsweise auch der elektrochemischen Oberflächenbehandlung von schüttfähigem Gut in Flüssigkeiten, wie beispielsweise beim chemischen und elektrolytischen Beizen in Säuren oder Laugen, sowie beim elektrolytischen Entfetten in alkalischen Bädern oder auch beim elektrolytischen Polieren auftreten. Das schüttfähige Gut wird bei der elektrolytischen Oberflächenbehandlung entweder als Kathode oder als Anode geschaltet, wobei die Schaltung als Anode beispielsweise beim elektrolytischen Polieren angewandt wird, während beispielsweise bei der Abscheidung von Aluminium das Schütt vorzugsweise als Kathode geschaltet wird.

Zur Massengalvanisierung, insbesondere zum galvanischen Abscheiden von Aluminium, ist eine bekannte Einrichtung geeignet, bei der zum Transport des schüttfähigen Gutes durch das Behandlungsbad ein Schwingförderer mit einer horizontalen und vertikalen Schwingkomponente vorgesehen ist. Dieser Schwingförderer transportiert das schüttfähige Gut unter Ausnutzung der Massenkräfte in einer wendelförmigen Förderrinne in ansteigender Richtung um eine Tragsäule, die mit der Förderrinne verbunden ist. Der Schwingförderer ist mit der Tragsäule in einem gas dichten Behälter untergebracht, der einen Elektrolyten enthält, in den der Schwingförderer teilweise eintaucht. Als Antriebsmittel dienen beispielsweise schrägwirkende Vibratoren oder schräggestellte Lenker. Zusätzlich können Schwerkraftförderer in der Form von Fallrohren vorgesehen sein. Solche Schwingförderer erfordern nur eine verhältnismäßig geringe Antriebskraft und ermöglichen eine schonende Förderung , des schüttfähigen Gutes. Man erhält eine intensive Warenbewegung und einen guten Elektrolytaustausch sowie eine gleichmäßige Stromaufnahme über die gesamte effektive Oberfläche des ausgebreiteten Gutes (DE-05 35 24 510).

Eine bekannte Einrichtung zur Oberflächenbehandlung von schüttfähigem Gut enthält eine wendelförmige Förderbahn, die an einer zentrisch angeordneten Tragsäule befestigt ist. Diese Förderbahn ist mit mehreren Stufen versehen, deren Stufenhöhe so bemessen ist, daß sich das Gut beim Fallen dreht und somit eine verbesserte Durchmischung erzielt wird. Eine größere Anzahl solcher Stufen bei gleicher Steigung der Förderbahn führt jedoch zu einer entsprechenden Vergrößerung der Anlage (E-A 0 209 015).

Der Erfindung liegt nun die Aufgabe zugrunde, diese Einrichtung zum Transport von schüttfähigem Gut in einer Flüssigkeit mit einem Schwingförderer zu vereinfachen und zu verbessern, insbesondere eine gute Durchmischung des Schüttgutes während des Transports in der Förderrinne erreicht werden.

Diese Aufgabe wird erfindungsgemäß gelöst mit den kennzeichnenden Merkmalen des Anspruchs 1. Mit dieser Ausführungsform erhält man einen gleichmäßigen Zugang der Flüssigkeit, insbesondere eines Elektrolyten, zum Schüttgut. Da diese Produktmischer jeweils zwischen den Tragholmen angeordnet sind, ist ihre Anzahl weder durch die Steigung der Förderbahn noch durch die Größe der Anlage begrenzt.

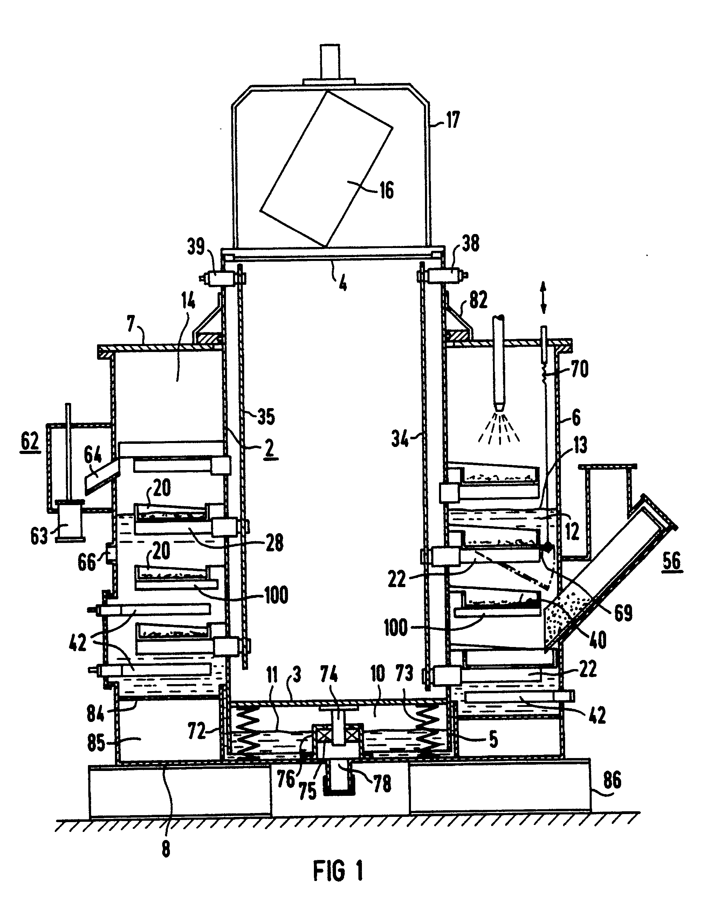

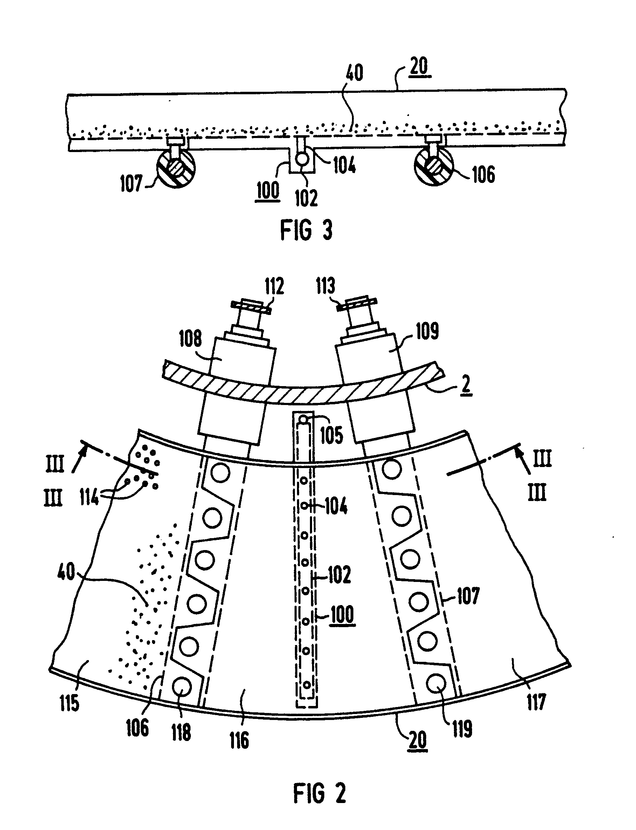

Zur weiteren Erläuterung der Erfindung wird auf die Zeichnung Bezug genommen, in deren Figur 1 eine Einrichtung zum Transport von schüttfähigem Gut mit einer Förderrinne schematisch veranschaulicht ist. Eine Ausführungsform einer Elektrolytzuführung gemäß der Erfindung ist in Figur 2 dargestellt. Figur 3 zeigt einen Schnitt durch den Teil der Laufbahn gemäß Figur 2.

Eine Einrichtung gemäß Figur 1 zum Transport von schüttfähigem Gut, die beispielsweise zum galvanischen Abscheiden von Aluminium aus aprotischen, sauerstoff- und wasserfreien aluminiumorganischen Elektrolyten vorgesehen sein soll, enthält ein Zentralrohr 2 mit einem Boden 3 und einem Deckel 4, das aus einem Behälter 6 herausragt, dessen Deckel 7 mit dem Zentralrohr 2 gasdicht verbunden ist. Zwischen dem Boden 3 des Zentralrohres 2 ist ein Gaspolster 10 eingeschlossen, das von einem hohlzylindrischen Rohransatz 5 am Boden 3 des Zentralrohres 2 seitlich begrenzt ist und das nach Art einer Taucherglocke auf einem unteren Spiegel 11 einer Flüssigkeit 12 ruht, in den das Zentralrohr 2 teilweise eintaucht und dessen oberer Spiegel 13 in der Figur gestrichelt angedeutet ist. Die Flüssigkeit 12 kann beispielsweise ein aprotischer sauerstoff- und wasserfreier aluminiumorganischer Elektrolyt sein.

Oberhalb des Deckels 4 des Zentralrohres 2 und damit außerhalb des Behälters 6 ist ein Antrieb 16 für das Zentralrohr 2 und die damit verbundene Förderrinne 20 vorgesehen, der an einem Lagerbock 17 befestigt ist. Der Antrieb 16 bewirkt in Verbindung mit einem in der Figur nicht dargestellten Exzenter eine Schwingbewegung des Zentralrohres 2 und damit der Förderrinne 20, die wendelförmig um das Zentralrohr 2 angeordnet ist. Die Förderrinne 20, die beispielsweise aus Kunststoff, insbesondere Hartgewebe, bestehen kann, ist mit Tragholmen 22 und 28 verbunden, die vorzugsweise zugleich als Kathoden dienen und mit Hilfe von nicht näher bezeichneten Durchführungen elektrisch isoliert durch den Behälter 2 hindurchgeführt sind. Die in Achs richtung übereinander angeordneten Tragholme 22 und 28 sind jeweils über eine gemeinsame elektrische Sammelschiene 34 bzw. 35 mit einem Kathodenanschluß 38 bzw. 39 verbunden. In der Figur sind auch drei Anoden angedeutet, die am nicht näher bezeichneten Deckel eines Anodenschachts befestigt und deren elektrische Anschlußleiter elektrisch isoliert durch diesen Deckel hindurchgeführt sind und in der Figur mit 47 bezeichnet sind. Eine weitere Anode 42 ist an der Wand des Behälters 6 befestigt.

Ein nur schematisch angedeuteter Einfuhrschacht 56 dient zur Zuführung des Schüttgutes 40, das in der Figur lediglich durch Punkte angedeutet ist und das beispielsweise aus Schrauben oder anderen Kleinteilen bestehen kann, die zur Galvanisierung innerhalb der Anlage vorgesehen sind. Eine Ausfuhrschleuse 62 enthält einen Ausfuhrschacht 63 und eine Rutsche 64. Unterhalb des Spiegels 13 ist eine Zuführung 66 für die Flüssigkeit 12 vorgesehen.

Zwischen dem Boden 3 des Zentralrohres 2 und dem Boden 8 des Behälters 6 sind Federn vorgesehen, von denen in der Figur nur zwei dargestellt und mit 72 und 73 bezeichnet sind. Ein zur Zentrierung dienender Zapfen 74 ist in einem Lager 75, das vorzugsweise ein Axialpendellager sein kann, in Achsrichtung des Zentralrohres 2 beweglich gelagert. Das Lager 75 ist in einem Lagergehäuse 76 untergebracht, das am Boden 8 des Behälters 6 befestigt ist. Der Boden 8 ist mit einer Öffnung 78 versehen, die zur Ableitung des Elektrolyten 12 dient. Das Zentralrohr 2 wird in einer Zentrierung in Achsrichtung beweglich geführt. Zwischen dem Deckel 7 des ruhenden Behälters 6 und dem beweglichen Zentralrohr 2 wird eine gasdichte Verbindung durch einen Abdichtungsbalg 82 hergestellt.

Das Gaspolster 10 besteht aus einem inerten Gas. In Verbindung mit einem Elektrolyten als Flüssigkeit 12 kann es vorzugsweise aus einem sauerstofffreien Gas, insbesondere Stickstoff $N_2$, bestehen, dessen Zuführung in der Figur zur Vereinfachung nicht dargestellt ist.

Dieses Gaspolster 10 kann durch die Auf- und Abwärtsbewegungen des schwingenden Systems aus Zentralrohr 2 und Förderrinne 20 leicht komprimiert und entspannt werden, ohne daß die Flüssigkeitssäule für die Förderung des Schüttgutes 40 nachteilige Drücke aufbauen kann.

Das zu aluminierende Schüttgut 40 wird über den Einfuhrschacht 56 in den unteren Bereich des Behälters 6 eingebracht und das Schüttgut 40 fällt dann auf das nicht näher bezeichnete untere Ende der Förderrinne 20. Auf dieser als Schwingrinne ausgebildeten und wendelförmig nach oben führenden Förderrinne 20 wird das Schüttgut 40 über den Spiegel 13 des Elektrolyten 12 hinaus nach oben transportiert und fällt dann in das trichterförmig ausgebildete obere Ende der aus dem Behälter 6 hinausführenden Rutsche 64.

Durch den Antrieb 16 wird die Förderrinne 20 über das Zentralrohr 2 zu Schwingungen mit einer etwa schraubenförmigen Bewegung angeregt. Aufgrund der schiefen Bewegung und den dabei auftretenden Beschleunigungen und Geschwindigkeiten wird dem auf der wendelförmig nach oben führenden Förderrinne 20 liegenden Schüttgut 40 eine Bewegung aufgezwungen, so daß es unter ständiger Zunahme an Höhe in Förderrichtung transportiert wird.

Falls ein mehrfacher Umlauf des Schüttgutes 40 im Elektrolyten 12 vorgesehen ist, kann die Förderrinne 12 mit einer Klappe 69 versehen sein, die mit einer Klappensteuerung 70 von außen steuerbar ist.

Unter der Förderrinne 20 ist nun erfindungsgemäß wenigstens ein Produktmischer vorgesehen, vorzugsweise sind in vorbestimmten Abständen mehrere Produktmischer unter der Förderrinne 20 angeordnet, von denen in der Figur nur zwei angedeutet und mit 100 bezeichnet sind.

Diese Produktmischer 100 sind gemäß Figur 2 radial unterhalb der Förderrinne 20 angeordnet. Diese Produktmischer sind mit einer in ihrer Längsrichtung verlaufenden Bohrung 102 und mit senkrechten Düsenöffnungen 104 versehen, die auch durch die Förderrinne 20 hindurchgeführt sind. Der Produktmischer ist zwischen zwei Tragholmen 106 und 107 angeordnet, die jeweils mit ihren Haltemuffen 108 und 109 durch das Zentralrohr 2 hindurchgeführt sind und an denen die Sammelschienen 112, 113 befestigt sind. Über eine Anschlußbohrung 105 kann der Elektrolyt zugeführt werden und tritt mit einem vorzugsweise einstellbaren Überdruck aus den Düsenöffnungen 104 aus. Durch den austretenden Elektrolyten 12 erhält man eine zusätzliche Durchmischung des Schüttgutes 40, das in der Förderrinne 20 bewegt wird, deren Perforierung in der Figur durch Öffnungen 114 angedeutet ist. Der Boden der Förderrinne 20 kann vorzugsweise aus Austauschsegmenten 115 bis 117 bestehen, die mit Kontaktschrauben 118 und 119 an den Tragholmen 106 und 107 befestigt sind.

Aus dem Schnitt der Figur 3 ist die Anordnung des Produktmischers 100 unterhalb der Förderrinne 20 zwischen den zugleich als Tragholme dienenden Tragholmen 106 und 107 zu entnehmen. Die Bewegung des aus den Düsenöffnungen 104 austretenden Elektrolyten ist annähernd senkrecht zur Bewegungsrichtung des Schüttgutes 40 gerichtet und bewirkt eine gute Durchmischung des Schüttgutes 40 und damit eine entsprechend gleichmäßige Abscheidung. In einer besonderen Ausführungsform können die Bohrungen 104 nicht senkrecht zur Ebene der Förderrinne 20, sondern derart dagegen geneigt sein, daß sich eine Richtungskomponente in der Bewegungsrichtung des Schüttgutes ergibt.

Im Ausführungsbeispiel ist eine Einrichtung zum Galvanisieren von schüttfähigem Gut vorgesehen, das zu diesem Zweck in einem Elektrolyten transportiert wird. Die Einrichtung kann jedoch auch zum Transport von schüttfähigem Gut vorgesehen sein, das beispielsweise zum Zwecke einer Vorbehandlung, beispielsweise zum Reinigen oder Beizen sowie zum Entfetten, die Einrichtung durchläuft. Die Einrichtung enthält dann anstelle des Elektrolyten ein flüssiges Behandlungsmedium, beispielsweise ein Reinigungsmittel oder ein Fettlösungsmittel. Ferner kann die Einrichtung zur Nachbehandlung eines Schüttgutes, beispielsweise zum Entwässern, verwendet werden.

## Ansprüche

1. Einrichtung zum Transport von schüttfähigem Gut mit einem Schwingförderer, dessen wendelförmige Förderrinne mit einem Zentralrohr eine schwingfähige Baueinheit bildet und in einem gasdichten Behälter angeordnet ist, der eine Flüssigkeit enthält, in die der Schwingförderer wenigstens teilweise eintaucht, **dadurch gekennzeichnet,** daß die Förderrinne (20) mit wenigstens einem Produktmischer (100) versehen ist, der radial unterhalb der Förderrinne (20) angeordnet ist und mit Düsenbohrungen (104) versehen ist, welche auch die Förderrinne (20) durchsetzen und die zur Strömungsführung der Flüssigkeit (12) vorgesehen sind.

89 P 3093

FIG 1

89 P 3093

40    20

107    100    102    104    106

**FIG 3**

112    113

108    109

2

III    III
III    III    114

105

104

40    102

100    107

115    117

106    118    116    20    119

**FIG 2**

| Kategorie | Kennzeichnung des Dokuments mit Angabe, soweit erforderlich, der maßgeblichen Teile | Betrifft Anspruch | KLASSIFIKATION DER ANMELDUNG (Int Cl⁴) |
|---|---|---|---|
| D,A | <u>EP - A1 - 0 209 015</u><br>(SIEMENS)<br>   \* Fig. \*<br>    -- | 1 | B 65 G 27/02<br>B 65 G 49/02<br>C 25 D 17/28 |
| A | <u>GB - A - 1 110 911</u><br>(DETREX)<br>   \* Fig. 7; Seite 2, Zeilen<br>   76-81 \*<br>    ---- | 1 | |

**EINSCHLÄGIGE DOKUMENTE**

EP 90103356.3

RECHERCHIERTE
SACHGEBIETE (Int Cl⁴)

B 65 G
C 25 D

Der vorliegende Recherchenbericht wurde für alle Patentansprüche erstellt

| Recherchenort | Abschlußdatum der Recherche | Prüfer |
|---|---|---|
| WIEN | 08-05-1990 | BAUMGARTNER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82